# EUROPÄISCHE PATENTSCHRIFT

(11) **EP 1 930 759 B1**
(45) Veröffentlichungstag und Bekanntmachung des Hinweises auf die Patenterteilung: **08.02.2012**
(21) Anmeldenummer: 07076035.0
(22) Anmeldetag: 30.11.2007
(51) Int. Cl.: G02B 21/36

(54) **Kameraadapter mit Kamerahalterung und Optikadapter**
Camera adapter with camera holder and lens adapter
Adaptateur d'appareil photo doté d'une fixation d'appareil photo et d'un adaptateur optique

(30) Priorität: 05.12.2006 DE 102006058358
(43) Veröffentlichungstag der Anmeldung: 11.06.2008
(60) Teilanmeldung: 10075762.4
(73) Patentinhaber: Carl Zeiss Meditec AG, 07745 Jena (DE)
(72) Erfinder: Gärtner, Hartmut, 73447 Oberkochen (DE); Koch, Werner, 75210 Keltern (DE); Robra, Wolfgang, 75323 Bad Wildbad (DE); Lücke, Christian, 73447 Oberkochen (DE); Rieth, Karsten, 73335 Dobel (DE)
(74) Vertreter: Theobald, Andreas

(56) Entgegenhaltungen:
- EP-A1- 1 477 763
- WO-A2-90/12335
- DE-A1- 2 848 605
- DE-A1- 4 344 366
- DE-A1- 10 244 669
- DE-U1- 20 010 421
- DE-U1- 29 722 332
- JP-A- 2002 350 740
- US-A- 5 006 872
- US-B1- 6 628 458

## Beschreibung

Die vorliegende Erfindung betrifft einen Kameraadapter mit einer Kamerahalterung und einem Optikadapter sowie die Kamerahalterung und den Optikadapter selbst.

In der Mikroskopie werden spezielle Fototuben eingesetzt, die für fotografische Aufnahmen eine Auskopplungseinrichtung im binokularen Tubus des Beobachters aufweisen. Das Anordnen der Auskopplungseinrichtung im binokularen Tubus des Beobachters ist jedoch nicht immer ohne weiteres möglich. Beispielsweise werden in der Mikrochirurgie häufig Schwenktuben eingesetzt, um ein Operationsmikroskop an die Operationssituation ergonomisch anpassen zu können. Bei Schwenktuben ist der Einsatz einer Auskopplungseinrichtung im binokularen Tubus jedoch nicht möglich. Für Stereomikroskope wie etwa Operationsmikroskope wählt man daher derzeit zumeist einen Kompromiss, nämlich einen sogenannten TV-Adapter, der mit einer Zusatzoptik versehen ist. Dieser wird an eine Auskopplungseinrichtung im Bereich des parallelen Strahlenganges zwischen dem Vergrößerungswechsler und dem Binokulartubus adaptiert.

Während ein TV-Adapter zum Aufnehmen von Fernsehbildern gut geeignet ist, eignet er sich weniger zur Verwendung zusammen mit digitalen Fotoapparaten. Die Verwendung des TV-Adapters stellt daher lediglich ein Kompromiss dar, der einige Nachteile mit sich bringt. So ist beispielsweise die Pupillenanpassung nicht optimal, so dass es passieren kann, dass in einem mit dem Fotoapparat aufgenommenen Bild das Sichtfeld beschnitten ist oder dass man so stark zoomen muss, dass nur ein kleiner Teil des Objektfeldes aufgenommen werden kann. Zum anderen werden die Bildgütekriterien für hoch auflösende Kamerachips in digitalen Fotoapparaten mit TV-Adaptern in der Regel nicht erfüllt, da sie an das Auflösungsvermögen von TV-Kameras, dass deutlich geringer ist als das von Fotoapparaten, angepasst sind. Mit anderen Worten, die Optik von TV-Adaptern wird den Ansprüchen, die ein digitaler Fotoapparat stellt, kaum gerecht.

Ein weiteres Problemfeld von Kameraadaptern nach Stand der Technik, die für Operationsmikroskope Verwendung finden, liegt in der Mechanikschnittstelle, also in der Art der Fixierung des Fotoapparats Kameraadapter. Dies betrifft sowohl herkömmliche Kameraadapter als auch TV-Adapter. Die Mechanikschnittstellen, die heutzutage von vielen Herstellern von Kameraadaptern eingesetzt werden, sind einerseits ein am äußeren Ende des Kameraobjektivs vorhandenes Filtergewinde oder ein dort vorhandenes Bajonett. Derartige mechanische Schnittstellen sind jedoch in der Regel nicht standardisiert und werden häufig mit dem jährlichen Modellwechsel vom Hersteller verändert. Unter Umständen kann eine derartige Schnittstelle beim Fotoapparat sogar ganz entfallen. Insbesondere im Bereich von Digitalen Kompaktkameras gibt es eine Vielzahl von Produkten, die weder ein Filtergewinde noch ein Bajonett aufweisen. Trotzdem nehmen viele Hersteller von Kameraadaptern die genannten Risiken, die sich beim Modellwechsel ergeben, in Kauf und statten ihre Kameraadapter mit zu speziellen Bajonetten oder speziellen Filtergewinden passenden Gegenstücken aus, an denen Kameras mit entsprechenden Filtergewinden oder Bajonetten fixiert werden können. Die Produktauswahl an Kameras, die an einem derartigen Kameraadapter fixiert werden können, ist jedoch aufgrund der Vielzahl unterschiedlicher Filtergewinde und Bajonette, die sich beispielsweise schon alleine aus verschiedenen Objektivdurchmesser ergeben kann, eingeschränkt.

Es wurde daher vorgeschlagen, zum Befestigen von Fotoapparaten an Mikroskopen oder Teleskopen Halterungen zu verwenden, die das Stativgewinde, das an nahezu allen Fotoapparaten vorhanden ist und eine weitgehende Standardisierung erfahren hat, zum Fixieren des Fotoapparats zu verwenden. Stativgewinde sind langlebig, das heißt die Schnittstelle bleibt in der Regel beim Modellwechsel als konstante Größe erhalten, und werden von fast allen Kameraherstellern auf der Kameraunterseite angeboten. Im Gegensatz zur Fixierung über Filtergewinde oder Bajonette, die zentrisch zum Objektiv angeordnet sind, weisen die Stativgewinde jedoch einen translatorischen Versatz in wenigstens zwei Richtungen gegenüber dem Objektiv auf. Es ist daher eine aufwändige Justierung eines über das Stativgewinde direkt oder indirekt an einem optischen Beobachtungsgerät fixierten Fotoapparates gegenüber dem Fotoadapter nötig.

Vorrichtungen zum Fixieren von Fotoapparaten an Mikroskopen, Feldstechern und Teleskopen unter Verwendung des Stativgewindes sind beispielsweise in US 6,628,458 B1, DE 102 44 669 A1, JP 2006-39191A, JP 2002-277953A, GB 1 215 710, US 2002/0197075 A1 und US 2,990,759 beschrieben. All diese Vorrichtungen weisen Verstelleinrichtungen auf, mit denen sich ein Versatz zwischen dem Objektiv und dem Stativgewinde ausgleichen lässt.

Die US 6,628,458 B1 beschreibt ein Mikroskop mit einer Kamerahalterung, die an einem Mikroskopfuß befestigt ist. Am Mikroskopfuß ist außerdem eine Halterung für den Mikroskoptubus angeordnet. Der Mikroskoptubus wird dabei von einer den Tubus umgreifenden Haltehülse gehalten. Weiterhin umfasst die Vorrichtung eine Verstelleinrichtung, an der eine Kamera befestigt werden kann und die ein Positionieren der Kamera gegenüber der den Tubus umgreifenden Haltehülse ermöglicht.

Die WO 90/12335 beschreibt ein Kamerabefestigungssystem, welches dem in US 6,628,458 B1 beschriebenen System ähnelt. Es ist eine hülsenförmiger Adapter vorhanden, der zwischen einem von einer Haltehülse an einem Mikroskopfuß gehaltenen Mikroskoptubus und der Kamera angeordnet ist. Die Adapter wird mittels eines Gewindes in das Objektivgewinde der Kamera eingeschraubt. Am Mikroskoptubus ist der Adapter verschiebbar gehalten.

Die DE 102 44 669 A1 beschreibt eine Augenmuschel, die bei Verwendung einer Kamera herausgezogen werden kann, um den Lichteinfall zwischen Objektiv von Kamera zu minimieren.

Eine erste Aufgabe der vorliegenden Erfindung ist es daher, eine Halterung für Kameraadapter zur Verfügung zu stellen, mit der sich Fotoapparate vorteilhaft mittels des Stativgewindes an einem Kameraadapter oder gegebenenfalls an einem optischen Beobachtungsgerät fixieren lassen.

Eine zweite Aufgabe der vorliegenden Erfindung ist es, einen vorteilhaften Kameraadapter zur Verfügung zu stellen.

Die erste Aufgabe wird durch eine Kamerahalterung nach Anspruch 1 gelöst, die zweite Aufgabe durch einen Kameraadapter nach Anspruch 14. Die abhängigen Ansprüche enthalten vorteilhafte Ausgestaltungen der Erfindung.

Eine erfindungsgemäße Kamerahalterung zum Fixieren einer Kamera oder eines Camcorders an einem optischen Beobachtungsgerät umfasst einen Stift mit einem Stativgewinde zum Einschrauben in ein Stativgewinde einer Kamera. Sie umfasst weiterhin eine Verstelleinrichtung, die derart ausgestaltet ist, dass sie den Ausgleich eines Versatzes zwischen Stativgewinde und dem Kameraobjektiv einer in der Kamerahalterung gehaltenen Kamera ermöglicht. Weiterhin umfasst die Kamerahalterung eine Hülse veränderbarer Länge, die zur Aufnahme des Kameraobjektivs ausgebildet ist. Die Innenseite der Hülse kann zu einem eingeführten Kameraobjektiv Spiel aufweisen. Die Hülse weist an einem Ende eine Auflage für das Kameragehäuse und am anderen Ende eine mechanische Schnittstelle auf, über die sie relativ zu dem optischen Beobachtungsgerät oder einem weiteren optischen Element wie etwa den Optikadapter festgelegt werden kann. Die Auflage liegt in einer zur longituden Achse der Hülse senkrecht verlaufenden Ebene, das heißt einer Ebene, deren Flächenmerkmale parallel zur longituden Achse ausgerichtet ist. Außerdem weist die Hülse einen Mechanismus zum Verändern ihrer axialen Länge auf. An der Hülse ist die Verstelleinrichtung so mittelbar oder unmittelbar fixiert, dass sie ein Positionieren der Kamera gegenüber der Hülse ermöglicht.

Mit der erfindungsgemäßen Kamerahalterung kann eine Fotokamera, etwa eine digitale Fotokamera, relativ zur Hülse so positioniert und fixiert werden, dass der Versatz zwischen dem Stativgewinde und dem Objektiv ausgeglichen ist. Da die Hülse mit ihrer mechanischen Schnittstelle relativ zum optischen Beobachtungsgerät oder zu einem zwischengeschalteten optischen Element festgelegt werden kann, ermöglicht es die erfindungsgemäße Halterung, den Fotoapparat unter Ausgleich des Versatzes zwischen dem Stativgewinde und dem Kameraobjektiv am optischen Beobachtungsgerät beziehungsweise am zwischengeschalteten optischen Element festzulegen.

Ein Justieren der optischen Achse des Kameraobjektivs relativ zur optischen Achse des optischen Beobachtungsgerätes beziehungsweise des zwischengeschalteten optischen Elementes erfolgt dadurch, dass das Kameragehäuse auf die Auflage der Hülse so aufgelegt wird, dass das Kameraobjektiv in die Hülse hineinragt. Durch das Auflegen des Kameragehäuses auf die Auflage der Hülse ist die optische Achse des Kameraobjektivs parallel zur longitudinalen Achse der Hülse ausgerichtet.

Hierbei macht man sich zu Nutze, dass die das Objektiv umgebende Fläche des Kameragehäuses in der Regel die optische Achse des Objektivs senkrecht schneidet. Die Ausrichtung der Hülse zur optischen Achse des optischen Beobachtungsgerätes beziehungsweise des optischen Elementes erfolgt durch die mechanische Schnittstelle der Hülse, mit der diese am optischen Beobachtungsgerät festgelegt wird. Auf diese Weise sind die optischen Achsen des optischen Beobachtungsgerätes beziehungsweise eines weiteren optischen Elements einerseits und dem Kameraobjektiv andererseits parallel ausgerichtet.

Um die Kamera, das heißt das Kameraobjektiv, vollständig optisch zu justieren, ist es darüber hinaus erforderlich, das die Austrittspupille des optischen Beobachtungsgeräts oder dem weiteren optischen Element in der Eintrittspupille des Kameraobjektivs liegt. Die Justierung kann durch axiales Verschieben des Kameraobjektivs relativ zum optischen Beobachtungsgerät beziehungsweise zum weiteren optischen Element entlang der optischen Achse des Kameraobjektivs erfolgen. Diese Verschiebung erfolgt in der erfindungsgemäßen Kamerahalterung durch Verändern der axialen Länge der Hülse.

Der Mechanismus zum Verändern der axialen Länge der Hülse kann beispielsweise einen Teleskopauszug umfassen. Das Verändern der Hülsenlänge kann dann durch einfaches Ausziehen des Auszuges erfolgen. Eine Arretiereinrichtung kann vorhanden sein, um den Auszug in einer Position festlegen zu können.

Alternativ kann der Mechanismus ein erstes, mit einem Innengewinde versehenes Hülsenteil und eine zweites, mit einem Außengewinde versehenes Hülsenteil umfassen, wobei das Außengewinde des zweiten Hülsenteils in das Innengewinde des ersten Hülsenteils eingreift. Ein Verändern der Hülsenlänge ist dann durch Verdrehen der Hülsenteile gegeneinander möglich. Das Einstellen der Hülsenlänge über ein Verdrehen ermöglicht ein sehr feines und genaues Justieren der Hülsenlänge.

Zusätzlich zum Mechanismus zum Verändern der axialen Länge der Hülse kann diese eine Drehvorrichtung umfassen, die derart angeordnet und ausgestaltet ist, dass sie das Drehen wenigstens eines der gehaltenen Kamera zugewandten Teils der Hülse um seine longitudinale Achse ermöglicht, ohne dass sich dabei die axiale Länge der Hülse ändert. Durch Drehen der Drehvorrichtung kann dann eine Aufrichtung des Bildes der Fotokamera erreicht werden. Die Drehvorrichtung kann insbesondere in die mechanische Schnittstelle integriert sein. In diesem Fall erfolgt ein Drehen der gesamten Hülse.

Damit ein Ausgleich des Versatzes zwischen dem Kameraobjektiv und dem Stativgewinde auf jeden Fall erfolgen kann, bietet die Verstelleinrichtung vorzugsweise drei Freiheitsgrade und wenigstens eine Klemmung, über die sich die Kamera in ihrer Position gegenüber der Hülse festlegen lässt, wobei jede Klemmung wenigstens auf einen Freiheitsgrad einwirkt. Die Verstelleinrichtung kann jedoch auch eine Klemmung umfassen, die auf wenigstens zwei Freiheitsgrade einwirkt. Auf diese Weise lässt sich die Zahl der Klemmungen verringern. Besonders vorteilhaft ist es, wenn die Verstelleinrichtung lediglich eine einzige Klemmung umfasst, die auf alle Freiheitsgrade einwirkt, da dann zum Fixieren der Lage der Kamera lediglich eine einzige Klemmung bedient werden muss. Insbesondere wenn das Fixieren der Kamera rasch zu bewerkstelligen sein soll, ist das Fixieren über lediglich eine einzige Klemmung vorteilhaft. Als Klemmung kann eine Spannvorrichtung, etwa eine Spannschraube oder ein Schnellspanner, vorhanden sein.

Um die Beweglichkeit der Verstelleinrichtung zu realisieren, kann diese wenigstens einen um eine Achse drehbaren Hebelarm und/oder wenigstens einen Verschiebemechanismus, beispielsweise einen Schieber, umfassen. Der Verschiebemechanismus kann statt durch einen Schieber auch durch ein Langloch in einem Hebelarm zusammen mit einem durch das Langloch hindurch geführten Bolzen, beispielsweise dem Gewindebolzen einer Spannschraube, gebildet sein.

Ein erfindungsgemäßer Kameraadapter umfasst sowohl eine erfindungsgemäße Kamerahalterung als auch einen zwischen der Kamerahalterung und dem optischen Beobachtungsgerät angeordneten Optikadapter. Er kann zudem eine Drehvorrichtung umfassen, mit der sich die Kamerahalterung gegenüber dem Optikadapter um die optische Achse verdrehen lässt, um eine Bildaufrichtung zu erreichen.

Der Optikadapter umfasst eine afokale optische Anordnung mit wenigstens zwei Linsen und einer reellen Abbildung der Eintrittspupille als Austrittspupille. Die Austrittspupille der optischen Anordnung befindet sich 40 Millimeter bis 100 Millimeter hinter dem Scheitel der letzten Linse. Hiermit lässt sich gewährleisten, dass sich die Austrittspupille des Adapters in die Eintrittspupille eines kompakten Kameraobjektivs wie etwa eine Digitalkamera abbilden lässt.

Wenn sich die Austrittspupille der optischen Anordnung 50 Millimeter bis 60 Millimeter hinter dem Scheitel der letzten Linse befindet, kann auch bei einer Telebrennweite des kompakten Kameraobjektivs gewährleistet werden, dass sich die Austrittspupille des Adapters in die Eintrittspupille des Kameraobjektivs abbilden lässt.

Eine Feinjustierung der Pupillenlage kann für die meisten digitalen Kompaktkameras zur optimalen Anpassung durch Variation des Abstandes des Kameraobjektivs vom Optikadapter erfolgen.

Die Lage der Austrittspupille der optischen Anordnung kann insbesondere realisiert werden, wenn die optische Anordnung eine erste Linsenkombination umfasst, die in Art eines Teleobjektivs ausgestaltet ist, und eine zweite Linsenkombination, die der ersten Linsenkombination nachgeschaltet und in Art eines Okulars ausgestaltet ist. In einer derartigen optischen Anordnung erzeugt die erste Linsenkombination ein Zwischenbild, das mit der zweiten Linsenkombination ins Unendliche abgebildet wird. Die Ausgestaltung der ersten Linsenkombination als Teleobjektiv ermöglicht eine relativ kompakte Bauweise des Optikadapters für eine vorgegebene Brennweite des ersten Linsensystems, oder es können bei einer vorgegebenen Baulänge des Optikadapters größere Brennweiten verwendet werden, was Abbildungsfehler zu minimieren hilft.

Durch eine geeignete Brechkraftverteilung in der optischen Anordnung kann hierbei auch ohne eine Feldlinse in der Nähe des Zwischenbildes der zuvor genannte Abstand der Austrittspupille vom Scheitel der letzten Linse erreicht werden. Die Brechkraftverteilung kann insbesondere realisiert werden, wenn die erste Linsenkombination zwei Linsen umfasst, wobei die eine Linse eine Positivlinse ist und die andere Linse eine der Positivlinse im Strahlengang nachfolgende Negativlinse, die eine größere Brechkraft als die Positivlinse hat.

Zum Umlenken des Strahlenganges im Optikadapter kann zwischen der ersten Linsenkombination und der zweiten Linsenkombination außerdem eine den Strahlengang ablenkende Reflexionsfläche, beispielsweise eine Prismenfläche oder eine Spiegelfläche, vorhanden sein.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Fig. 1 zeigt einen erfindungsgemäßen Kameraadapter mit daran adaptierter Digitalkamera.
Figuren 2a bis 2c zeigen ein erstes Ausführungsbeispiel für die Kamerahalterung des Kameraadapters aus Fig. 1.
Figuren 3a bis 3c zeigen ein zweites Ausführungsbeispiel für die Kamerahalterung des Kameraadapters aus Fig.1.
Figuren 4a bis 4c zeigen ein drittes Ausführungsbeispiel für die Kamerahalterung des Kameraadapters aus Fig.1.
Fig. 5 zeigt ein Detail der Kamerahalterung.
Fig. 6 zeigt schematisch die optischen Komponenten des Optikadapters.

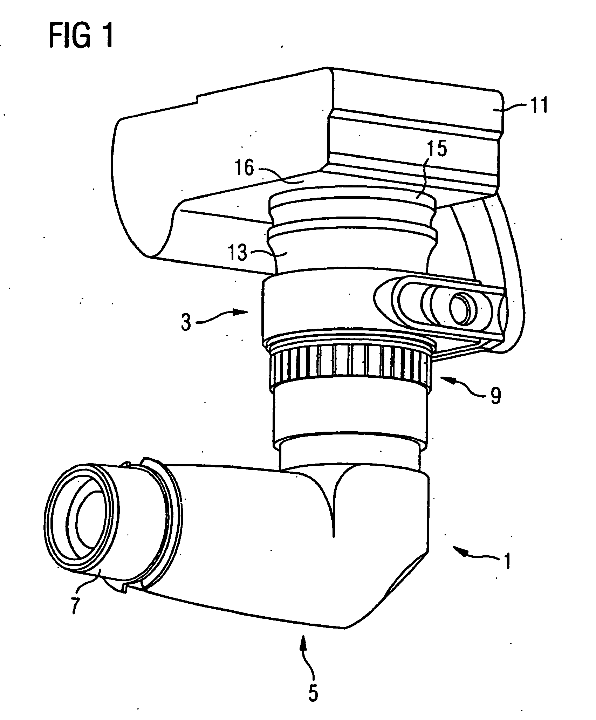

Der in Fig. 1 dargestellte Kameraadapter 1 besteht im wesentlichen aus zwei Teilen, nämlich der Kamerahalterung 3 und dem Optikadapter 5. Der Optikadapter 5 weist an einem Ende eine Steckhülse 7 auf, die in einen passenden Stutzen eines optischen Beobachtungsgerätes wie etwa eine Operationsmikroskopes oder eines Teleskops, eingeführt werden kann. Am anderen Ende des Optikadapters 5 ist eine mechanische Schnittstelle 9 vorhanden, an der die Kamerahalterung 3 befestigt werden kann. Die mechanische Schnittstelle kann im einfachsten Fall als Überwurfmutter ausgebildet sein, die mit einem passenden Außengewinde der Kamerahalterung 3 zusammenwirkt. Die mechanische Schnittstelle kann aber auch anders ausgeführt sein, beispielsweise in Form eines Stutzens und einer zum Stutzen passenden Steckhülse. Gegebenenfalls kann der Abschnitt des Optikadapters 5, in dem die Überwurfmutter 9 angeordnet ist, um die optische Achse des Optikadapters 5 gegen die übrigen Abschnitte des Optikadapters 5 verdreht werden. Die Überwurfmutter und/oder die Drehmöglichkeit können aber auch Teil der Kamerahalterung 3 sein.

In Fig. 1 ist außerdem eine Digitalkamera 11 dargestellt, die über ihr Stativgewinde an der Kamerahalterung 3 befestigt ist. Das Objektiv (in der Figur nicht zu erkennen) ist in eine Hülse 13 der Kamerahalterung 3 eingeführt. Der Rand 15 dieser Hülse 13 bildet einerseits eine Auflagefläche für die das Kameraobjektiv umgebende Gehäusefläche 16, die die optische Achse des Objektivs senkrecht schneidet. Das Aufliegen auf dem Rand 15 sorgt daher dafür, dass die optische Achse des Kameraobjektivs parallel zur longitudinalen Hülsenachse und damit parallel zur optischen Achse des Kameraadapters 1, verläuft. Außerdem schirmt die Hülse 13 das Kameraobjektiv gegen Umgebungslicht ab.

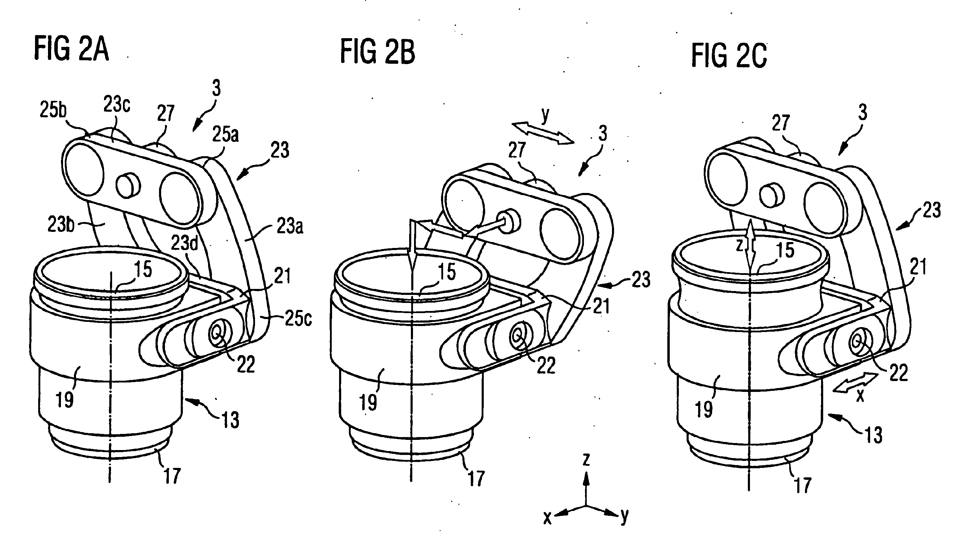

Ein erstes Ausführungsbeispiel für die Kamerahalterung des Kameraadapters 1 ist in den Figuren 2a bis 2c im Detail dargestellt. Es sind die Hülse 13, der Rand 15 sowie am dem Rand 15 gegenüber liegenden Ende ein Außengewinde 17 zu erkennen. Das Außengewinde 17 stellt das Gegenstück zur Überwurfmutter des Optikadapters dar und bildet somit die mechanische Schnittstelle zu diesem. Statt des Außengewindes kann auch eine Steckhülse oder ein Stutzen vorhanden sein.

Die Hülse 13 ist von einem Klemmring 19 umgeben, der mit einem Schieber 21 verbunden ist. Am dem Klemmring 19 abgewandten Ende des Schiebers 21 ist ein Gelenkparallelogramm 23 angeordnet, das aus vier Hebelarmen 23a bis 23d aufgebaut ist, die jeweils an ihren Enden über Drehgelenke 25a bis 25d mit einander verbunden sind. Der Hebelarm 23d wird hierbei durch eine Traverse des Schiebers 21 gebildet. In der Mitte des Hebelarms 23c ist eine Schraube 27 mit ein einem zum Stativgewinde einer Kamera passenden Gewinde angeordnet.

Mittels der dargestellten Konstruktion ist ein Justieren der Kamera 11 relativ zur Hülse 3 mit drei zu einander senkrecht stehenden Freiheitsgraden möglich. Die Justierung in X-Richtung erfolgt über den Schieber 21, die Justierung in Y-Richtung durch Bewegen des Parallelogramms 23 und Justierung in Z-Richtung durch Verschieben der Hülse 3 im Klemmring. Zwar ist die Bewegung des Parallelogramms, genauer gesagt der im Parallelogramm angeordneten Schraube 27 (und damit der daran befestigten Kamera) keine Linearbewegung, sondern eine Bewegung auf einer gebogenen Kurve, jedoch kann die Z-Komponente der Kurve durch die Verschieblichkeit der Hülse im Klemmring 19 ausgeglichen werden. Insgesamt ist es dadurch möglich, den Versatz, den ein im Kameragehäuse angeordnetes Stativgewinde zum Kameraobjektiv aufweist, auszugleichen.

Die Bewegungsmöglichkeiten, die der Schieber 21, das Parallelogramm 23 und die verschiebliche Hülse 13 ermöglichen, sind in den Figuren 2a bis 2c durch unterschiedliche Einstellzustände der einzelnen Elemente angedeutet.

Der Schieber 21 und das Gelenkparallelogramm 23 sind mit Klemmschrauben 22 versehen, mit deren Hilfe diese Elemente gegen ungewolltes Bewegen fixiert werden können, sobald die Kamera justiert ist. Statt Klemmschrauben können auch so genannte Schnellspannvorrichtungen vorhanden sein. Ein Schnellspanner könnte beispielsweise einen beweglich gelagerten Nocken umfassen, der derart angeordnet ist, dass er eine erste Stellung einnehmen kann, in der er auf zwei gegen einander bewegliche Elemente der Halterung derart einwirkt, dass er diese aneinanderpresst, und sie so mittels Reibschluss gegeneinander fixiert. In einer zweiten Stellung des Nockens werden die beweglichen Elemente dagegen nicht aneinandergepresst. Um die Bewegung von der ersten Stellung in die zweite Stellung und umgekehrt zu realisieren, kann der Nocken beispielsweise drehbar gelagert sein und mit einem Bedienhebel fest verbunden sein. Mittels des Bedienhebels kann dann der Nocken in seiner Position verändert werden. Eine Schnellspannvorrichtung kann natürlich auch zum Spannen des Klemmrings 19 Verwendung finden.

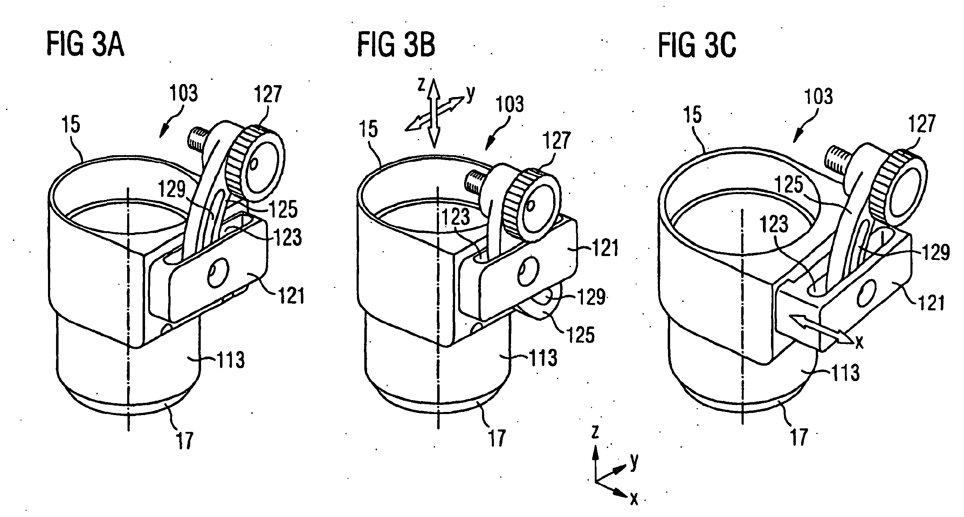

Ein Zweites Ausführungsbeispiel für die erfindungsgemäße Kamerahalterung wird nachfolgend mit Bezug auf die Figuren 3a bis 3c beschrieben. Die Figuren zeigen eine Kamerahalterung 103, die eine Hülse 113 mit einem daran befestigten Schieber 121 umfasst. Der Schieber 121 weist eine Aufnahme 123 auf, in der sich ein kreissegmentförmig gebogener Bügel 125 befindet. Am äußeren Ende des Bügels 125 befindet sich eine zu einem Stativgewinde einer Kamera passende Schraube 127. Der Bügel 125 ist mit einem Langloch 129 versehen, welches eine Krümmung aufweist, die der Krümmung des Bügels 125 folgt.

Durch die Aufnahme 122 des Schiebers 121 erstreckt sich ein Gewindestift (in den Figuren nicht zu erkennen), der durch das Langloch 129 des Bügels 125 geführt ist. Der Gewindestift bildet zusammen mit der Kontur des Langlochs 129 ein Führungssystem zum Führen des Bügels 125, wenn dieser innerhalb der Aufnahme 123 des Schiebers 121 verschoben wird. Außerdem stellt die Stiftachse eine Drehachse dar, um die der Bügel 125 gedreht werden kann. Durch eine Spannmutter, die sich auf einem aus dem Schieber 121 herausragenden Abschnitt des Gewindestiftes befindet (nicht dargestellt) kann der Bügel 125 gegenüber dem Gewindestift fixiert werden.

Wenn der Bügel 125 um den Gewindestift gedreht wird, so beschreibt die Schraube 127, und damit eine an der Schraube 127 befestigte Kamera einen Kreisbogen. Der Radius des Kreisbogens ist hierbei durch den Abstand der Schraube 127 vom Gewindestift festgelegt. Dieser Abstand kann jedoch durch Verschieben des Bügels innerhalb der Aufnahme verändert werden, so dass die Position der Schraube 127 im Bereich einer ringförmigen Fläche, deren Grenzen durch den minimalen Kreisradius und den maximalen Kreisradius festgelegt ist, verschoben werden. Der minimale und der maximale Kreisradius sind wiederum durch die Länge des Bügels 125 und die Position des Langloches 129 im Bügel 125 festgelegt. Statt eines gebogenen Bügels und eines gebogenen Langloches auch ein grader Bügel mit einem geraden Langloch Verwendung finden.

Während, wie beschrieben, ein Justieren der Kamera in Y- und Z-Richtung durch das Zusammenwirken der Drehbewegung des Bügels 125 um den Gewindestift und das Verschieben des Gewindestiftes innerhalb des Langloches 129 möglich ist, ist das Justieren in X-Richtung durch Verschieben des Schiebers 121 möglich. Auch der Schieber ist mit einer Klemmschraube versehen, um ihn in einer gewählten Position festlegen zu können. Dadurch stehen zum Justieren der Kamera drei Freiheitsgrade zur Verfügung, die es ermöglichen, den Versatz zwischen dem Stativgewinde und dem Kameraobjektiv auszugleichen. Zur Verdeutlichung der Bewegungsmöglichkeiten sind in den Figuren 3a bis 3c unterschiedliche Stellungen des Schiebers 121 und des Bügels 125 dargestellt.

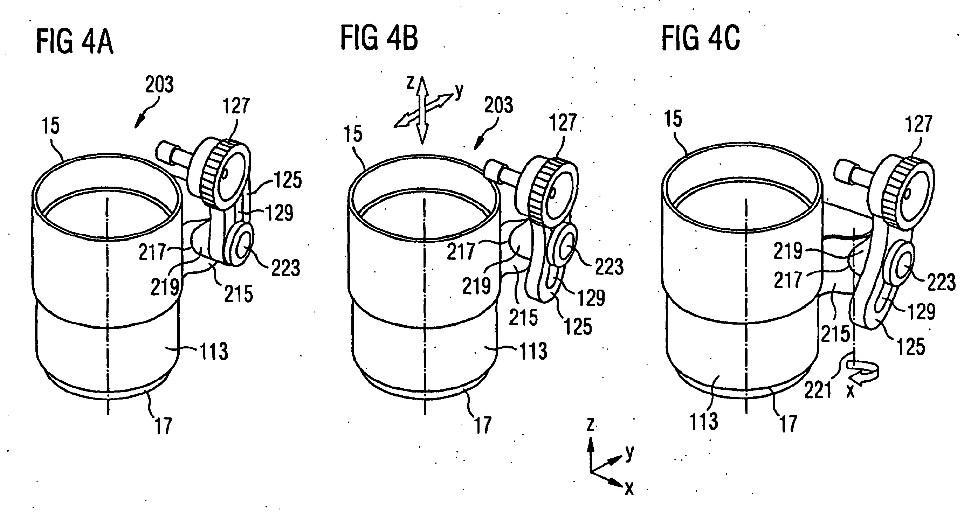

Ein drittes Ausführungsbeispiel für die erfindungsgemäße Kamerahalterung wird nachfolgen mit Bezug auf die Figuren 4a bis 4c beschrieben. Diese Ausführungsvariante ähnelt stark der mit Bezug auf die Figuren 3a bis 3c beschriebenen Ausführungsvariante. Elemente, die in beiden Ausführungsvarianten identisch sind, sind daher in den Figuren 3a bis 3c und 4a bis 4c mit denselben Bezugsziffern bezeichnet.

Die Kamerahalterung 203 des dritten Ausführungsbeispiels umfasst eine Hülse 113, die einen Ansatz 215 mit einer Aufnahme 217 aufweist. In der Aufnahme 217 ist ein Stift 219 schwenkbar gelagert. Die Schwenkachse des Stiftes 219 steht parallel zur Mittelachse der Hülse 113. Der Stift 219 erstreckt sich durch das Langloch 129 eines gebogenen Bügels 125. Wie im zweiten Ausführungsbeispiel weist auch hier das Langloch 129 eine Biegung auf, die der Biegung des Bügels 125 folgt. Auch hier kann statt eines gebogenen Bügels mit einem gebogenen Langloch auch ein gerader Bügel mit einem geraden Langloch Verwendung finden.

Wie im zweiten Ausführungsbeispiel kann auch im dritten Ausführungsbeispiel die Schraube 127 (und damit eine daran befestigte Kamera) im Bereich einer Kreisringfläche bewegt werden, so dass durch die Kombination einer Drehung des Bügels 125 um den Stift 219 und einer Verschiebung des Bügels relativ zum Stift 219 eine Einstellung im Y-und Z-Richtung vorgenommen werden kann.

Die Justierung im X-Richtung wird in diesem Ausführungsbeispiel durch eine Schwenkbewegung des Stiftes 219, der den Bügel 125 trägt, ermöglicht. Die Schwenkbewegung erfolgt um die Schwenkachse 221 (vgl. Fig. 4c). Bei einem Schwenken des Stiftes 219 um die zur Mittelachse der Hülse 113 parallele Schwenkachse 221 verändert sich der Abstand der Schraube 127 von der Mittelachse der Hülse 113. Durch das Zusammenspiel der Drehung des Bügels 125 um den Stift 219, der Schwenkbewegung des Stiftes 219 um die Schwenkachse 221 und der Verschiebebewegung des Bügels 125 relativ zum Stift 219 lassen sich daher drei Freiheitsgrade zum Justieren der Kamera relativ zur Hülse 113 realisieren. Ein Festlegen der Position lässt sich durch eine einzige Klemmung 223 im Bereich des Stiftes 219 realisieren, beispielsweise durch eine auf den Stift 219 aufgesetzte Spannschraube.

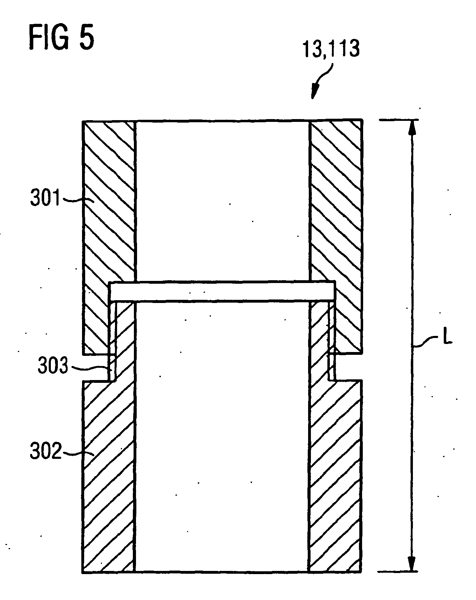

In allen drei Ausführungsbeispielen ist die Hülse 13, 113 zweiteilig ausgebildet. Dies ist schematisch in Fig. 5 dargestellt. Die in Fig. 5 dargestellte Hülse 13, 113 umfasst eine erstes Hülsenteil 301, das ein Innengewinde aufweist und ein zweites Hülsenteil 302, das ein zum Innengewinde passendes Außengewinde 303 aufweist. Die beiden Hülsenteile sind teilweise mit einander verschraubt.

Die axiale Länge L der Hülse lässt sich durch Verdrehen der beiden Hülsenteile 301, 302 gegeneinander variieren. Die Längenänderung bezogen auf den Drehwinkel hängt von der Steigung des Gewindes 303 ab. Ein Verdrehen der beiden Hülsenteile 301, 302 gegeneinander ermöglicvht einpräzises Einstellen des Abstands einer in der Kamerahalterung 3 gehaltenen Kamera 11, genauer gesagt, Ihres Kameraobjektivs, vom Optikadapter 5, was dazu genutzt werden kann, die Ausgangspupille des Optikadapters in die Eingangspupille des Kameraobjektivs zu justieren. Statt der beschriebenen Justierung über ein Außen- und ein Innengewinde der beiden Hülsenteile 301, 302 besteht auch die Möglichkeit, die Hülse in Art eines Teleskopauszuges auszugestalten. Die Justierung kann dann durch Verstellen des Teleskopauszuges erfolgen. Insbesondere ermöglicht es der Teleskopauszug auch, die beiden Hülsenteile zusätzlich noch um die Hülsenachse drehbar auszugestalten, ohne dass sich bei einer Drehung die Hülsenlänge L verändert. Eine solche Drehung von Hülsenteilen gegeneinander kann dazu verwendet werden, das vom optischen Beobachtungsgerät angebotene Bild in der Kamera aufzurichten. In diesem Fall kann die mit Bezug auf Fig. 1 beschriebene Drehmöglichkeit im Optikadapter 5 entfallen.

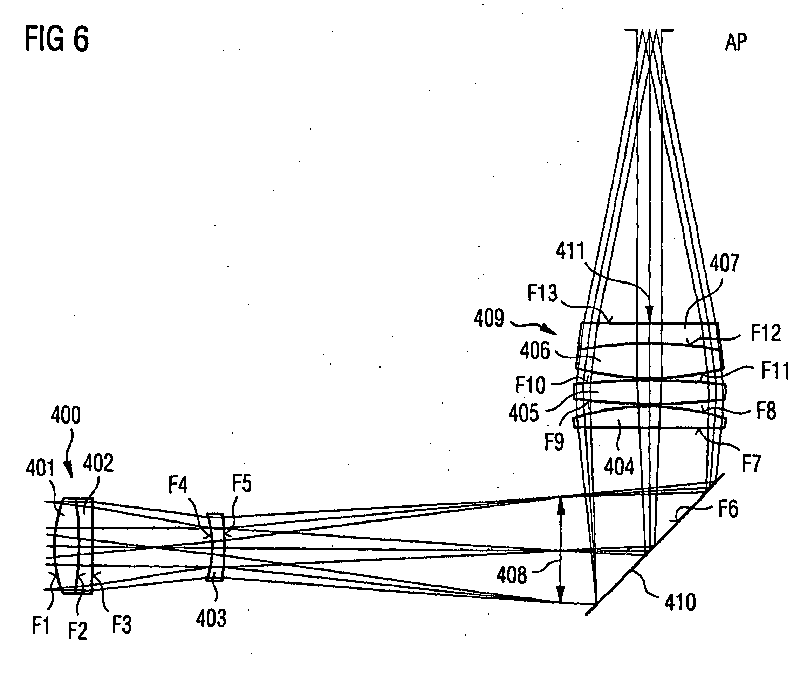

In Fig. 6 sind die optischen Komponenten des Optikadapters schematisch dargestellt. Der Optikadapter 5 umfasst fünf Linsen 400, 403, 404, 405 und 409, von denen die erste Linse 400 und die letzte Linse 409 als Kittglieder ausgebildet ist.

Die Linsen lassen sich in zwei Linsengruppen unterteilen. Die erste Linsengruppe umfasst die Linsen 401, 402 und 403 und stellt ein Teleobjektiv dar. Das Kittglied 400 stellt insgesamt eine Positivlinse dar, die aus einer Positivlinse 401 und einer Negativlinse 402 zusammengesetzt ist. Die Linse 403 ist eine negativ ausgebildete Meniskenlinse, deren Brechkraft stärker als die Brechkraft des Kittgliedes ist.

Die zweite Linsenkombination umfasst drei Positivlinsen 404, 405 und 409 und stellt ein Okularsystem dar, mit dem das Zwischenbild 408 des Teleobjektivs nach unendlich abgebildet wird. Die letzte Positivlinse 409 ist ein Kittglied, das aus einer Positivlinse 406 und einer Negativlinse 407 zusammengesetzt ist. Der Begriff Okularsystem findet hier Verwendung, weil die Abbildungseigenschaften der zweiten Linsengruppe denen eines Okulars entsprechen. Im Unterschied zu einem Okular ist das zweite Linsensystem jedoch nicht dazu vorgesehen, für eine Betrachtung des Zwischenbilds 408 mit dem Auge zu dienen.

Zwischen dem Teleobjektiv und dem Okularsystem ist zudem eine Reflektionsfläche 410 angeordnet, der als verspiegelte Glasscheibe oder als Prismenfläche ausgebildet sein kann und mit dem eine Ablenkung des Strahlengangs erfolgt.

Die Radien, Dicken, Glasarten und freie Linsendurchmesser der Linsenflächen F1 bis F13 sind in der nachfolgenden Tabelle zusammengestellt.

**Tabelle**

| Nr. | Radius | Dicke | Glas | ∅_{frei} |
|---|---|---|---|---|
| F1 | 21.5160 | . . | | 17.0 |
| | | 5.000 | NPK52A | |
| F2 | -57.5310 | . . | | 17.0 |
| | | 3.000 | NBAF51 | |
| F3 | 291.352 | . . | | 17.0 |
| | | 24.45 | | |
| F4 | -14.2270 | . . | | 12.0 |
| | | 2.500 | NSK5 | |
| F5 | -47.9850 | . . | | 12.0 |
| | | 88.00 | | |
| F6 | PLAN | Spiegel | | |
| | | 23.21 | | |
| F7 | -277.810 | . . | | 30.5 |
| | | 4.000 | NFK5 | |
| F8 | -50.1190 | . . | | 31.0 |
| | | 0.300 | | |
| F9 | 163.190 | . . | | 31.0 |
| | | 4.500 | NFK5 | |
| F10 | -110.600 | . . | | 31.0 |
| | | 0.300 | | |
| F11 | 66.8340 | . . | | 30.0 |
| | | 6.500 | NLKA9 | |
| F12 | -66.8340 | . . | | 29.0 |
| | | 4.000 | NSF66 | |
| F13 | PLAN | . . | | 27.0 |
| | | 55.00 | | |
| | | . . | | 4.4∅AP |

Die Brechkraftverteilung auf die beiden Linsen des Teleobjektivs ist so gewählt, dass auf eine Feldlinse in der Nähe des Zwischenbildes 408 verzichtet werden kann. So kann erreicht werden, dass die Austrittspupille AP ein reelles Bild der Eintrittspupille des optischen Systems ist, das einen Abstand vom Scheitel 411 der Linsenfläche F13 zwischen 40 Millimetern und 100 Millimetern, insbesondere zwischen 50 Millimetern und 60 Millimetern, aufweist. Wenn die Linsen gemäß der in der Tabelle angegebenen Daten ausgeführt sind, liegt die Austrittspupille AP 55 Millimeter hinter dem Scheitel 411. So ist gewährleistet, dass sich die Austrittspupille AP des Optikadapters 5 in die Eintrittspupille des Kameraobjektivs auch bei einer Telebrennweite des Kameraobjektivs abbilden lässt. Eine Feinjustierung der Pupillenlage kann durch Feinjustieren der Länge der Hülse 13, 113 in der Kamerahalterung erfolgen.

Der Abbildungsmaßstab des Optikadapters 5 ist im vorliegenden Ausführungsbeispiel 3,7 zu 1 gewählt. Ein derartiger Abbildungsmaßstab wird erhalten, wenn die Brennweite des ersten Linsensystems zur Brennweite des zweiten Linsensystems im Verhältnis 3,7 zu 1 steht. In afokalen Systemen wie dem Optikadapter entspricht dieses Zahlenverhältnis auch dem Verhältnis von Eintrittspupillendurchmesser zu Austrittspupillendurchmesser. Der gewählte Abbildungsmaßstab von 3,7 zu 1 erzeugt bei einer Eintrittspupille mit einem Durchmesser von 16 Millimetern eine Austrittspupille AP von ca. 4,3 Millimetern. Wenn man diesen Austrittspupillendurchmesser zu Grunde legt und von einem Pupillenabstand vom Scheitel der letzten Linse von 55 Millimeter ausgeht, so lässt sich erreichen, dass bei einer auf das Kleinbildformat normierten Brennweite von f = 100 des Kameraobjektivs das Bildformat füllende Abbildung erzielt wird. Die auf das Kleinbildformat normierte Brennweite von f = 100 entspricht bei einer Digitalkamera mit 1/1.8"-Sensor einer Brennweite von f = 20,6 Millimeter.

Mit einem Optikadapter, dessen Linsen die in der Tabelle angegebenen Parameter aufweisen, kann also der Kamerachip einer Digitalkamera mit einem im Telebereich arbeitenden Objektiv voll ausgenutzt werden. Die Festlegung auf die formatfüllende Brennweite f = 100 (normiert auf das Kleinbildformat) ist ein Kompromiss zwischen dem optischen Aufwand und den Kosten. Will man eine formatfüllende Abbildung im Weitwinkelbereich erzielen, so wären bei einer Austrittspupillenlage von 55 Millimetern hinter dem Scheitel der letzten Linse sehr große Linsendurchmesser im Optiksystem notwendig, um die im Weitwinkelbereich vorliegenden größeren Bildwinkel erzielen zu können. Um die geforderten Bildgütekriterien zu erfüllen, ist dann jedoch ein sehr hoher optischer Aufwand, d.h. eine erhöhte Anzahl an Linsen, nötig, was wiederum die Baugröße, das Gewicht und die Herstellungskosten der Optikadapters erhöht.

Bei einem Operationsmikroskop kann die Auskopplung des Strahlengangs für den Optikadapter im parallelen Strahlengang zwischen dem Vergrößerungssystem des Operationsmikroskops und dem Binokulartubus über ein Teilerprisma erfolgen.

Obwohl die Kamerahalterung, der Optikadapter und der Kameraadapter mit Bezug auf eine Fotokamera beschrieben worden sind, sind sie auch zur Verwendung zusammen mit Camcordern geeignet.

### Bezugszeichenliste

- 1: Kameraadapter
- 3: Kamerahalterung
- 5: Optikadapter
- 7: Steckhülse
- 9: Mechanische Schnittstelle
- 11: Kamera
- 13: Hülse
- 15: Rand
- 16: Gehäusefläche
- 19: Klemmring
- 21: Schieber
- 22: Klemmschraube
- 23: Gelenkparallelogramm
- 23 A-D: Hebelarm
- 25 A-D: Gelenk
- 27: Schraube
- 103: Kamerahalterung
- 113: Hülse
- 121: Schieber
- 123: Aufnahme
- 125: Bügel
- 127: Schraube
- 129: Langloch
- 203: Kamerahalterung
- 215: Ansatz
- 217: Aufnahme
- 219: Stift
- 221: Schwenkachse
- 301: erstes Hülsenteil
- 302: zweites Hülsenteil
- 303: Gewinde
- 400: Linse (Kitglied)
- 401: Linse
- 402: Linse
- 403: Linse
- 404: Linse
- 405: Linse
- 406: Linse
- 407: Linse
- 408: Zwischenbild
- 409: Linse (Kitglied)
- 410: Reflektionsfläche
- 411: Scheitel
- F1-F13: Flächen
- AP: Austrittspupille

## Patentansprüche

1. Kamerahalterung (3, 103, 203) zum Fixieren einer Kamera (11) oder eines Camcorders an einem optischen Beobachtungsgerät mit einem Stift (27), welcher ein Stativgewinde zum Einschrauben in ein Stativgegengewinde einer Kamera (11) aufweist, mit einer Verstelleinrichtung (19, 23, 21, 121, 125), die derart ausgestaltet ist, dass sie den Ausgleich eines Versatzes zwischen Stativgegengewinde und dem Kameraobjektiv einer gehaltenen Kamera (11) ermöglicht, und mit einer Hülse (13, 113), die ein mechanische Schnittstelle (9) umfasst, über die sie relativ zu dem optischen Beobachtungsgerät festgelegt werden kann, wobei die Hülse (13, 113) eine Hülse (13, 113) veränderbarer Länge ist, die
- zur Aufnahme des Kameraobjektivs ausgebildet ist,
- an einem Ende eine Auflage (15) für das Kameragehäuse (16) aufweist, die in einer zur longituden Achse der Hülse (13, 113) senkrecht verlaufenden Ebene liegt,
- am anderen Ende die mechanische Schnittstelle (9) umfasst, und
- einen Mechanismus (301, 302, 303) zum Verändern ihrer axialen Länge aufweist,
wobei die Verstelleinrichtung (19, 23, 121, 125) so an der Hülse (13, 113) mittelbar oder unmittelbar fixiert ist, dass sie ein Positionieren der Kamera (11) gegenüber der Hülse ermöglicht.

2. Kamerahalterung (3, 103, 203) nach Anspruch 1, **dadurch gekennzeichnet, dass** der Mechanismus zum Verändern der Hülsenlänge einen Teleskopauszug umfasst.

3. Kamerahalterung (3, 103, 203) nach Anspruch 1, **dadurch gekennzeichnet, dass** der Mechanismus zum Verändern der Hülsenlänge ein erstes, mit einem Innengewinde versehenes Hülsenteil (301) und ein zweites, mit einem Außengewinde (303) versehenes Hülsenteil (302) umfasst, wobei das Außengewinde (303) des zweiten Hülsenteils (302) in das Innengewinde des ersten Hülsenteils (301) eingreift.

4. Kamerahalterung (3, 103, 203) nach einem der Ansprüche 1 bis 3, **dadurch gekennzeichnet, dass** die Hülse (13, 113) eine Drehvorrichtung umfasst, die derart angeordnet und ausgestaltet ist, dass sie das Drehen wenigstens eines der gehaltenen Kamera (11) zugewandten Teils der Hülse (13, 113) um seine longitudinale Achse ermöglicht.

5. Kamerahalterung (3, 103, 203) nach Anspruch 4, **dadurch gekennzeichnet, dass** die Drehvorrichtung in die mechanische Schnittstelle integriert ist.

6. Kamerahatterung (3, 103, 203) nach einem der vorangehenden Ansprüche, **dadurch gekennzeichnet, dass** die Verstelleinrichtung (19, 21, 23, 121, 125) drei Freiheitsgrade bietet und wenigstens eine Klemmung vorhanden ist, über die sich die Kamera (11) in ihrer Position gegenüber der Hülse (13, 113) festlegen lässt wobei jede Klemmung wenigstens auf einen Freiheitsgrad einwirkt.

7. Kamerahalterung (103, 203) nach Anspruch 6, **dadurch gekennzeichnet, dass** die Verstelleinrichtung eine Klemmung umfasst, die auf wenigstens zwei Freiheitsgrade einwirkt.

8. Kamerahalterung (203) nach Anspruch 7, **dadurch gekennzeichnet, dass** die Verstelleinrichtung lediglich eine Klemmung umfasst, die auf alle drei Freiheitsgrade einwirkt.

9. Kamerahalterung (3, 103, 203) nach einem der Ansprüche 6 bis 8, **dadurch gekennzeichnet, dass** als Klemmung eine Spannvorrichtung vorhanden ist.

10. Kamerahalterung (3, 103, 203) nach Anspruch 9, **dadurch gekennzeichnet, dass** als Spannvorrichtung Schnellspanner vorhanden ist.

11. Kamerahalterung (3, 103, 203) nach einem der Ansprüche 6 bis 10, **dadurch gekennzeichnet, dass** die Verstelleinrichtung wenigstens einen um eine Drehachse drehbaren Hebelarm (23A - 23D, 125) umfasst und/oder wenigstens einen Verschiebemechanismus (19, 21, 121) umfasst.

12. Kamerahalterung (3, 103, 203) nach Anspruch 11, **dadurch gekennzeichnet, dass** wenigstens ein Verschiebemechanismus (21, 121) ein Schieber ist.

13. Kamerahalterung (3, 103, 203) nach Anspruch 11 oder 12, **dadurch** ekennzeichnet, dass wenigstens ein Verschiebemechanismus durch ein Langloch (129) in einem Hebelarm (125) und einen durch das Langloch (129) hindurchgeführten Bolzen (219) gebildet ist.

14. Kameraadapter mit einer Kamerahalterung (3) nach einem der Ansprüche 1 bis 13 und einem Optikadapter (5) zum Zwischenschalten zwischen ein optisches Beobachtungsgerät und eine Kamera (11), der eine afokale optische Anordnung mit wenigstens zwei Linsen (400, 403, 404, 405, 409), mit einer Eintrittspupille und mit einer Austrittspupille (AP) umfasst, wobei sich die Austrittspupille (AP) der optischen Anordnung 40 mm bis 100 mm hinter dem Scheitel (411) der letzten Linse (409) befindet und ein reelles Bild einer Eintrittspupille ist.

15. Kameraadapter nach Anspruch 14, **dadurch gekennzeichnet, dass** sich die Austrittspupille (AP) der optischen Anordnung 50 mm bis 60 mm hinter dem Scheitel (411) der letzten Linse (409) befindet.

16. Kameraadapter nach Anspruch 14 oder Anspruch 15, **dadurch gekennzeichnet, dass** die optische Anordnung eine erste Linsenkombination (400, 403) umfasst, die in Art eines Teleobjektivs ausgestaltet ist, und eine zweite Linsenkombination (404, 405, 409) umfasst, die der ersten Linsenkombination (400, 403) nachgeschaltet und in Art eines Okulars ausgestaltet ist.

17. Kameraadapter nach Anspruch 16, **dadurch gekennzeichnet, dass** die erste Linsenkombination zwei Linsen (400, 403) umfasst, wobei die eine Linse eine Positivlinse (400) und die andere Linse eine der Positivlinse (400) im Strahlengang nachgeschaltete Negativlinse (403) ist, die eine größere Brechkraft als die Positivlinse (400) besitzt.

18. Kameraadapter nach einem der Ansprüche 14 bis 17, **dadurch gekennzeichnet, dass** zwischen der ersten Linsenkombination (400, 403) und der zweiten Linsenkombination (404, 405, 406) eine Reflektionsfläche (410) vorhanden ist.

19. Kameraadapter nach einem der Ansprüche 14 bis 18, **dadurch gekennzeichnet, dass** er eine Dreheinrichtung umfasst, mit der sich die Kamerahalterung (3) gegenüber dem Optikadapter (5) um die optische Achse verdrehen lässt.

## Claims

1. Camera holder (3, 103, 203) for fixing a camera (11) or a camcorder to an optical observation device, said holder having a pin (27), which has a stand thread for being screwed into a stand mating thread of a camera (11), having an adjusting device (19, 23, 21, 121, 125) which is configured in such a manner that it makes it possible to compensate for an offset between the stand mating thread and the camera objective of a camera (11) being held, and having a sleeve (13, 113) comprising a mechanical interface (9) by which the sleeve (13,113) can be secured relative to the optical observation device,
the sleeve (13, 113) being a variable-length sleeve (13, 113) which
- is designed to receive the camera objective,
- has a support (15) for the camera housing (16) at one end, said support being on a plane that runs perpendicular to the longitudinal axis of the sleeve (13, 113),
- comprises the mechanical interface (9) at the other end, and
- has a mechanism (301, 302, 303) for changing its axial length,
the adjusting device (19, 23, 121, 125) being directly or indirectly fixed to the sleeve (13, 113) in such a manner that it makes it possible to position the camera (11) with respect to the sleeve.

2. Camera holder (3, 103, 203) according to claim 1, **characterized in that** the mechanism for changing the length of the sleeve comprises a telescopic extension.

3. Camera holder (3, 103, 203) according to claim 1, **characterized in that** the mechanism for changing the length of the sleeve comprises a first sleeve part (301), which is provided with an internal thread, and a second sleeve part (302) which is provided with an external thread (303), the external thread (303) of the second sleeve part (302) engaging in the internal thread of the first sleeve part (301).

4. Camera holder (3, 103, 203) according to one of claims 1 to 3, **characterized in that** the sleeve (13, 113) comprises a rotating apparatus which is arranged and configured in such a manner that it makes it possible to rotate at least one part of the sleeve (13, 113), which faces the camera (11) being held, about its longitudinal axis.

5. Camera holder (3, 103, 203) according to claim 4, **characterized in that** the rotating apparatus is integrated in the mechanical interface.

6. Camera holder (3, 103, 203) according to one of the preceding claims, **characterized in that** the adjusting device (19, 21, 23, 121, 125) provides three degrees of freedom, and at least one clamping means which can be used to fix the position of the camera (11) with respect to the sleeve (13, 113) is provided, each clamping means acting on at least one degree of freedom.

7. Camera holder (103, 203) according to claim 6, **characterized in that** the adjusting device comprises a clamping means which acts on at least two degrees of freedom.

8. Camera holder (203) according to claim 7, **characterized in that** the adjusting device comprises only one clamping means which acts on all three degrees of freedom.

9. Camera holder (3, 103, 203) according to one of claims 6 to 8, **characterized in that** a tensioning apparatus is provided as the clamping means.

10. Camera holder (3, 103, 203) according to claim 9, **characterized in that** a quick-action tensioner is provided as the tensioning apparatus.

11. Camera holder (3, 103, 203) according to one of claims 6 to 10, **characterized in that** the adjusting device comprises at least one lever arm (23A - 23D, 125) which can be rotated about an axis of rotation and/or at least one displacement mechanism (19, 21, 121).

12. Camera holder (3, 103, 203) according to claim 11, **characterized in that** at least one displacement mechanism (21, 121) is a slide.

13. Camera holder (3, 103, 203) according to claim 11 or 12, **characterized in that** at least one displacement mechanism is formed by an elongated hole (129) in a lever arm (125) and a bolt (219) which is passed through the elongated hole (129).

14. Camera adapter having a camera holder (3) according to one of claims 1 to 13 and an optical adapter (5) which is intended to be interposed between an optical observation device and a camera (11) and comprises an afocal optical arrangement having at least two lenses (400, 403, 404, 405, 409), having an entrance pupil and having an exit pupil (AP), the exit pupil (AP) of the optical arrangement being situated 40 mm to 100 mm behind the vertex (411) of the last lens (409) and is a real image of an entrance pupil.

15. Camera adapter (5) according to claim 14, **characterized in that** the exit pupil (AP) of the optical arrangement is situated 50 mm to 60 mm behind the vertex (411) of the last lens (409).

16. Camera adapter (5) according to claim 14 or claim 15, **characterized in that** the optical arrangement comprises a first lens combination (400, 403), which is configured in the manner of a telephoto objective, and a second lens combination. (404, 405, 409) which is connected downstream of the first lens combination (400, 403) and is configured in the manner of an eyepiece.

17. Camera adapter (5) according to claim 16, **characterized in that** the first lens combination comprises two lenses (400, 403), one lens being a positive lens (400) and the other lens being a negative lens (403) which is connected downstream of the positive lens (400) in the beam path and has a greater refractive power than the positive lens (400).

18. Camera adapter (5) according to one of claims 14 to 17, **characterized in that** a reflecting surface (410) is provided between the first lens combination (400, 403) and the second lens combination (404, 405, 406).

19. Camera adapter according to one of claims 14 to 18, **characterized in that** it comprises a rotating device which can be used to rotate the camera holder (3) about the optical axis with respect to the optical adapter (5).

## Revendications

1. Fixation d'appareil photo (3, 103, 203) destinée à fixer un appareil photo (11) ou un caméscope à un dispositif d'observation optique, comprenant une broche (27) pourvue d'un filetage de trépied pour vissage dans un contre-filetage de trépied d'un appareil photo (11), un dispositif de réglage (19, 23, 21, 121, 125) conçu pour permettre la compensation d'un déport entre le contre-filetage de trépied et l'objectif d'un appareil photo (11) maintenu, et comprenant un fourreau (13, 113) qui comporte une interface mécanique (9) permettant son immobilisation par rapport au dispositif d'observation optique, le fourreau (13, 113) étant un fourreau (13, 113) de longueur variable, qui
- est conçu pour recevoir l'objectif de l'appareil photo,
- présente, à une extrémité, un support (15) pour le boîtier (16) de l'appareil photo, qui est situé dans un plan perpendiculaire à l'axe longitudinal du fourreau (13, 113),
- comporte, à l'autre extrémité, l'interface mécanique (9), et
- présente un mécanisme (301, 302, 303) pour faire varier sa longueur axiale,
le dispositif de réglage (19, 23, 121, 125) étant fixé indirectement ou directement sur le fourreau (13, 113) de façon à permettre un positionnement de l'appareil photo (11) par rapport au fourreau.

2. Fixation d'appareil photo (3, 103, 203) selon la revendication 1, **caractérisée en ce que** le mécanisme de variation de la longueur de fourreau comprend une extension télescopique.

3. Fixation d'appareil photo (3, 103, 203) selon la revendication 1, **caractérisée en ce que** le mécanisme de variation de la longueur du fourreau comprend une première partie de fourreau (301) pourvue d'un filetage intérieur et une deuxième partie de fourreau (302) munie d'un filetage extérieur (303), le filetage extérieur (303) de la deuxième partie de fourreau (302) venant en prise dans le filetage intérieur de la première partie de fourreau (301).

4. Fixation d'appareil photo (3, 103, 203) selon l'une des revendications 1 à 3, **caractérisée en ce que** le fourreau (13, 113) comprend un dispositif de rotation disposé et conçu de façon à permettre la rotation d'au moins une partie du fourreau (13, 113), orientée vers l'appareil photo (11) maintenu, autour de son axe longitudinal.

5. Fixation d'appareil photo (3, 103, 203) selon la revendication 4, **caractérisée en ce que** le dispositif de rotation est intégré dans l'interface mécanique.

6. Fixation d'appareil photo (3, 103, 203) selon l'une des revendications précédentes, **caractérisée en ce que** le dispositif de réglage (19, 21, 23, 121, 125) offre trois degrés de liberté et en qu'est prévu au moins un blocage permettant d'immobiliser l'appareil photo (11) dans sa position par rapport au fourreau (13, 113), chaque blocage agissant au moins sur un degré de liberté.

7. Fixation d'appareil photo (103, 203) selon la revendication 6, **caractérisée en ce que** le dispositif de réglage comporte un blocage qui agit sur au moins deux degrés de liberté.

8. Fixation d'appareil photo (203) selon la revendication 7, **caractérisée en ce que** le dispositif de réglage comprend seulement un blocage qui agit sur les trois degrés de liberté.

9. Fixation d'appareil photo (3, 103, 203) selon l'une des revendications 6 à 8, **caractérisée en ce que** le blocage prévu est un dispositif de serrage.

10. Fixation d'appareil photo (3, 103, 203) selon la revendication 9, **caractérisée en ce que** le dispositif de serrage prévu est un dispositif de blocage rapide.

11. Fixation d'appareil photo (3, 103, 203) selon l'une des revendications 6 à 10, **caractérisée en ce que** le dispositif de réglage comprend au moins un bras de levier (23A - 23D, 125) pouvant tourner autour d'un axe de rotation et/ou comprend au moins un mécanisme de déplacement (19, 21, 121).

12. Fixation d'appareil photo (3, 103, 203) selon la revendication 11, **caractérisée en ce qu'**au moins un mécanisme de déplacement (21, 121) est un coulisseau.

13. Fixation d'appareil photo (3, 103, 203) selon la revendication 11 ou 12, **caractérisée en ce qu'**au moins un mécanisme de déplacement est formé par un trou oblong (129) ménagé dans un bras de levier (125) et par un axe (219) passant à travers le trou oblong (129).

14. Adaptateur d'appareil photo doté d'une fixation d'appareil photo (3) selon l'une des revendications 1 à 13 et d'un adaptateur optique (5) pour interposition entre un dispositif d'observation optique et un appareil photo (11), qui comprend un système optique afocal pourvu d'au moins deux lentilles (400, 403, 404, 405, 409), une pupille d'entrée et une pupille de sortie (AP), la pupille de sortie (AP) du système optique étant située à une distance de 40 mm à 100 mm derrière le sommet (411) de la dernière lentille (409) et étant une image réelle d'une pupille d'entrée.

15. Adaptateur d'appareil photo selon la revendication 14, **caractérisé en ce que** la pupille de sortie (AP) du système optique est située à une distance de 50 mm à 60 mm derrière le sommet (411) de la dernière lentille (409).

16. Adaptateur d'appareil photo selon la revendication 14 ou la revendication 15, **caractérisé en ce que** le système optique comprend une première combinaison de lentilles (400, 403) ayant la forme d'un téléobjectif, et une deuxième combinaison de lentilles (404, 405, 409) qui est placée en aval de la première combinaison de lentilles (400, 403) et a la forme d'un oculaire.

17. Adaptateur d'appareil photo selon la revendication 16, **caractérisé en ce que** la première combinaison de lentilles comprend deux lentilles (400, 403), l'une des lentilles étant une lentille positive (400) et l'autre lentille étant une lentille négative (403) placée en aval de la lentille positive (400) dans la trajectoire du faisceau, laquelle possède une plus grande puissance de réfraction que la lentille positive (400).

18. Adaptateur d'appareil photo selon l'une des revendications 14 à 17, **caractérisé en ce qu'**une surface réfléchissante (410) est prévue entre la première combinaison de lentilles (400, 403) et la seconde combinaison de lentilles (404, 405, 406).

19. Adaptateur d'appareil photo selon l'une des revendications 14 à 18, **caractérisé en ce qu'**il comprend un dispositif de rotation permettant à la fixation d'appareil photo (3) de tourner autour de l'axe optique par rapport à l'adaptateur optique (5).
